# EUROPEAN PATENT SPECIFICATION

(11) **EP 2 172 348 B1**
(45) Date of publication and mention of the grant of the patent: **07.11.2012**
(21) Application number: 09002035.5
(22) Date of filing: 13.02.2009
(51) Int. Cl.: B60C 7/10

(54) **Method for fitting a puncture-proof tire tube to a tire**
Verfahren zum Montieren eines pannensicheren Reifenschlauchs in einen Reifen
Procédé d'adaptation d'un tube de pneu antiperforation au pneu

(30) Priority: 06.10.2008 JP 2008259321
(43) Date of publication of application: 07.04.2010
(73) Proprietor: Kabushikigaisha Katazen, Obu-city Aichi 474-0011 (JP)
(72) Inventor: Kondo, Kumeo, Obu-shi, Aichi 474-0062 (JP); Kato, Nobuji, Toyoake-shi, Aichi 470-1105 (JP)
(74) Representative: Kramer - Barske - Schmidtchen

(56) References cited:
- DE-A1- 19 822 819
- JP-A- 8 332 805
- US-A- 6 131 630
- US-B1- 6 578 613

## Description

### BACKGROUND OF THE INVENTION

### Field of the Invention

The present invention relates to a method for fitting a puncture-proof tire tube to a tire, wherein the tire tube is a tubular long member extrusion-molded with an elastomer as a raw material, is capable of being easily fitted in tires of various sizes, and is capable of being used repeatedly.

### Description of Related Art

As an example of a tire tube that is not punctured upon being pierced with nails (which is referred to as a puncture free tire tube), JP-A-8-142603 discloses a method of molding foamed polyurethane by die molding into a ring shape corresponding to a tire size. The tire tube is molded into a ring shape having a size that correspond to a tire size, and thus is necessarily molded into different sizes for corresponding to tires of different sizes. Upon fitting the tire tube to a tire (tire outer wall), the tire tube climbs over a rim immediately before completing the fitting operation, and thus for climbing over the rim, is necessarily elongated partially in the circumferential direction at the part climbing over the rim. The operation often cannot be performed by humans, but a large equipment may be necessarily used, thereby complicating the operation of fitting the tire tube to a tire. Furthermore, the foamed polyurethane necessarily has certain hardness for preventing excessive cross-sectional deformation. The hard foamed polyurethane tube has small elasticity, whereby the ride quality is deteriorated due to impacts and vibrations, which are generated from unevenness on the road surface and transmitted to the human body, and also the vehicle body is deteriorated in durability due to impacts to the vehicle body. Moreover, foamed polyurethane is generally poor in water resistance, and thus becomes brittle due to water absorption upon using in the rain.

As another example of a puncture-proof tire tube, it has been known that a thermosetting polyurethane elastomer in a solution form is injected into an air tube through a tire valve with an injection machine, and then is cured by heating. The production of the tire tube requires an injection machine, and the thermosetting polyurethane elastomer deteriorates the ride quality due to the heavy weight of the material itself and is not suitable for use in the rain due to its poor water resistance.

As still another example of a puncture-proof tire tube, JP-A-2005-96471 discloses that a thermoplastic polyurethane elastomer in a molten state is injected into an air tube through a tire valve with an injection machine, and cured at ordinary temperature. The production of the tube also requires an injection machine, and since an elastomer in a molten state is injected into an air tube with pressure, a hollow part cannot be formed inside, and a foamed structure cannot be produced although the tube has a relatively small specific gravity (ca. 0.9) as compared to the tube formed of thermosetting polyurethane (ca. 1.1). Accordingly, the tire tube is still heavy as compared to an air tube and provides poor ride quality.

JP 8-332805 A relates to a tire wheel having a no-puncture tire structure, wherein the tire wheel has a filler made of an elastic foam body.

US 6,131,630 A discloses a tire having a casing defining a hollow interior and a fill disposed in the interior of the casing, wherein the fill includes a first layer and a second layer, wherein said fill layers are flat layers and can be made of a foamed rubber.

DE 198 22 819 A1 relates to a method for manufacturing a bicycle tire.

US 6,578,613 B1 discloses a tire having a casing defining a hollow interior and a fill disposed in the interior of the casing, wherein the fill includes a first layer and a second layer, wherein said fill layers are flat layers and can be made of a foamed rubber.

### SUMMARY OF THE INVENTION

An object of the invention is to solve the problems associated with the conventional puncture-proot tire tubes and to provide a method for fitting a puncture-proof tire tube to a tire capable of fitting the tube easily to a tire.

The above object is achieved by the method according to claim 1. Further developments of the present invention are set out in the dependent claims.

The invention relates to, as a first aspect, a method for fitting a puncture-proof tire tube as claimed in claim 1.

According to the first aspect of the invention, the tire tube can be easily fitted to a tire since there is no necessity of the operation of elongating the tube with a large force in the circumferential direction for the tube climbing over the rim immediately before completing the fitting operation, the operation being necessary in the conventional foamed urethane tire tube. In the case where there is a surplus length of the tire tube (i.e., the tire tube is too long) upon attaching the both ends of the tube to each other after once fitting the tire tube into the tire outer wall, the tire tube may be taken out from the tire outer wall and cut into a length corresponding to the surplus length. In the case where the tire tube is too short to form a gap between the both ends of the tube having been fitted into the tube housing space of the tire outer wall, a small piece of the tire tube having a length corresponding to the length of the gap may be cut out from the extrusion-molded tube long member, and may be filled in the gap. In this case, while both the tire tube and the tube small piece are present inside the tire, the boundaries between the tube and the tube small piece (connecting parts) are pressed in the circumferential direction of the tube owing to the elasticity of the tube, thereby totally integrating them. Accordingly, the presence of the tube small piece does not provide any problem on the tire.

The puncture-proof tire tube fitted according to the method of the invention is obtained by cutting the tube long member, which is an extrusion-molded product of an elastomer, into the length corresponding to the circumferential length at the center of the cross section of the tire outer wall, whereby the tire tube is not punctured upon being pierced with nails, does not require periodical adjustment of air pressure, which is necessary for a pneumatic tire, can be easily fitted to tires of various sizes, and can be reused. Furthermore, the tire tube is in a form of a long member but is not in an annular shape, whereby the tire tube can be fitted into the tire outer wall in such a state that the tire outer wall is not detached from a bicycle or the like but is mounted on the rim.

The puncture-proof tire tube fitted according to the method of the invention has, before fitting into the tube housing space of the tire outer wall, a long member that is capable of elastically deformed in both the longitudinal direction and the cross sectional direction, and is not in an annular shape as in the conventional puncture-proof tire tubes. In a state where one of the beads of the tire outer wall is released from one of the edges of the rim to form a tube fitting opening on one side of the rim on the cross section, upon inserting the tire tube into the tire housing space of the tire outer wall through the tube fitting opening, a conventional tire tube in an annular shape necessarily climbs over the edge of the rim, which has been released from the bead of the tire outer wall, for inserting the tire tube into the tube housing space of the tire outer wall. However, the puncture-proof tire tube is in a linear shape capable of elastically deformed, and can be inserted into the tube housing space of the tire outer wall sequentially from one end in the longitudinal direction of the tube, and both ends of the tube having been disposed in an annular form in the tube housing space are attached to each other, thereby fitting the tube into the tube housing space of the tire outer wall. Accordingly, there is no necessity of the operation of elongating the tube in the circumferential direction upon fitting the tube into the tube housing space of the tire outer wall for climbing over the edge of the rim, whereby the tube can be easily fitted into the tube housing space of the tire outer wall.

The tube is a solid member of an extrusion-molded elastomer, and the elastomer has good elasticity, i.e., compression and restoration property close to compressed air, by its material. Therefore, the tire having the tube having been fitted into the tube housing space of the tire outer wall provides favorable ride quality equivalent to a pneumatic tire and provides less impacts to the vehicle body. Even in the state where the tube is fitted into the tube housing space of the tire outer wall, the tube has both ends attached to each other to produce a part that is discontinuous in the circumferential direction. However, the both ends of the tube attached to each other (i.e., the discontinuous part of the tube) are covered with the tire outer wall to provide no problem in ride quality and durability. With respect to the ride quality, in particular, the tube fitted to the tire outer wall is slightly compressed on the cross section and is slightly elongated in the circumferential direction, whereby the both ends of the tube press each other to provide a state that is equivalent to a tube continuous in the circumferential direction from the standpoint of ride quality. Furthermore, upon exchanging the tire outer wall owing to abrasion of the tire outer wall, the tube can be reused by fitting the tube to a fresh tire outer wall.

The ratio of the cross sectional area of the tube to the cross sectional area of the tube housing space of the tire outer wall is from 1 to 1.3 times. In the case where the ratio exceeds 1.3 times, it becomes difficult to fit the tube to the tire outer wall, and in the case where the ratio is less than 1, a gap is formed between the inner surface of the tire outer wall and the tube to deteriorate the unity of the tire outer wall and the tube, thereby failing to attain the function of the tube.

A long member extrusion-molded with an elastomer as a raw material is cut into a length corresponding to the circumferential length of at the center of the cross section of the tire outer wall to produce the tube, and the tube is fitted into the tube housing space of the tire outer wall, which is different from the conventional constitution, in which a tube molded into an annular shape, such as an air tube or a urethane tube, is fitted to the tire outer wall. Accordingly, even when the tube is to be applied to various tire sizes defined by the outer diameter and the width, the cut length of the long member is changed corresponding to the target tire size, thereby producing tubes capable of being applied to various tire sizes by using the same tube length material. Consequently, there is no necessity of producing various kinds of tubes for various tire sizes, and thus production and management of tire tubes can be considerably facilitated.

A tire having the tire above-described tire tube fitted therein is not punctured upon being pierced with nails, does not require periodical adjustment of air pressure, which is necessary for a pneumatic tire, and provides ride quality equivalent to a pneumatic tire owing to the aforementioned factors. Furthermore, an injection machine is not necessary, which is required for the resin injection tube obtained by injecting the solution of a thermosetting urethane elastomer or a thermoplastic elastomer into a hollow air tube with an injection machine. The tire tube is in the form of a long member but is not in an annular shape, such that the tire tube can be fitted to a tire of a bicycle without detachment of the tire from the bicycle. For example, in the case where an air tube of a bicycle is replaced with the tire tube according to the first aspect of the invention, air is released from the air tube, which is then taken out from the rim and the tire outer wall and cut for removing from the tire, and thereafter, the tire tube in the form of a long member is inserted between the rim and the tire outer wall, which are in a state where the tire outer wall is assembled to the rim, thereby fitting the tire tube to the tire.

The invention relates to, as a second aspect, the method according to the first aspect of the invention, wherein the elastomer has a shore A hardness of from 15 to 65.

In the second aspect of the invention, it is difficult to extrusion-mold the elastomer since it is too soft in the case where the shore A hardness is less than 15, and the ride quality upon fitting the tire tube to the tire is deteriorated in the case where the shore A hardness exceeds 65.

The invention relates to, as a third aspect, the method according to the first or second aspect of the invention, wherein the elastomer is a foamed elastomer having a foaming factor of 3 or less.

The tire tube used in the method according to the third aspect of the invention contains an extrusion-molded elastomer having a foaming factor of 3 or less, which enables the use of a foamed elastomer as the elastomer. The tire tube after extrusion molding has inside air bubbles that are independent to each other or partially continuous, thereby decreasing the specific gravity of the elastomer as compared to an unfoamed elastomer. In the method of injecting a thermoplastic elastomer in a molten state into an air tube with an injecting machine, the thermoplastic elastomer is foamed upon melting by heating in the tank, and thus the elastomer is separated into a foamed part and an unfoamed part due to the difference in specific gravity, which disables homogeneous charging of the thermoplastic elastomer in the tube. For attaining homogeneous charging, it is necessary to provide a complicated agitator in the tank, which is not practically employed. According to the third aspect of the invention, the specific gravity of the tire tube can be 1/3 at most as compared to the method of injecting a thermoplastic elastomer into an air tube, thereby decreasing greatly the weight of the tube. The term "foaming factor" referred herein means a value obtained by dividing the density of the raw material resin by the density of the foamed body. In the case where the foaming factor exceeds 3, the ride quality may be deteriorated due to poor elasticity of the tube, and the tube may be deteriorated in durability due to its brittleness.

The invention relates to, as a fourth aspect, the method according to one of the first to third aspects of the invention, wherein an outer layer of the tire tube contains an unfoamed elastomer molded, and a remaining inner layer occupying the most part of the tire tube contains a highly foamed elastomer molded.

According to the fourth aspect of the invention, the outer layer of the tire tube, which is in direct contact with the inner surfaces of the tire outer wall and the rim, is molded with an unfoamed elastomer, whereby the tire tube is less abraded even when the tube is in directly contact with the inner surfaces of the tire outer wall and the rim. The inner layer of the tire tube, which occupies the most part of the tire tube, is molded with a highly foamed elastomer having sufficient elasticity, whereby favorable ride quality can be ensured upon using the tire tube in a tire, for example, of a bicycle. Consequently, the tire tube used in the method according to the fourth aspect of the invention attains both the two conflicting properties, i.e., the abrasion resistance of the tube and the favorable ride quality upon using the tire tube in a tire, for example, of a bicycle.

The invention relates to, as a fifth aspect, the method according to one of the first to fourth aspects of the invention, wherein the puncture-proof tire tube has a pore with a porosity of from 3 to 25% that is continuous in the longitudinal direction of the tire tube on a cross section of the tire tube.

According to the fifth aspect of the invention, one or plural pore(s) having a porosity of from 3 to 25% that is or are continuous in the longitudinal direction of the tire tube on a cross section of the tire tube is or are provided, whereby the weight of the tube can be decreased while maintaining the necessary elasticity of the tube. In the case where the tire tube is molded with a foamed elastomer and has the pore(s), the tube can be decreased in weight by 1/4 at most as compared to a tube obtained by injecting a thermoplastic elastomer in a molten state into an air tube with an injection machine. The term "porosity" referred herein means the ratio of the total area of the pore(s) to the total area of the tube including the pore(s) on the extrusion cross section of the tube. In the fifth aspect of the invention, in the case where the porosity exceeds 25%, the tire tube may be deformed excessively upon receiving the ground contact pressure upon using, whereby the ride quality may be deteriorated, and the durability of the tube may be deteriorated due to its brittleness. In the case where the porosity is less than 3%, the effect of decreasing the weight owing to the pore provided inside the tube may not be expected.
Figs. 1A and 1B are an elevational view and an enlarged perspective view showing a tube long member C₀, respectively.
Fig. 2 is a perspective view showing an initial state of an operation of detaching one side of a tire outer wall 1 on its cross section from a rim 3, and fitting a tube C₁ into a tube housing space 2 of a tire T₁.
Fig. 3 is an elevational view showing the initial state shown in Fig. 2.
Fig. 4 is an elevational view showing a state where the tube C₁ is totally fitted into the tire T₁.
Fig. 5 is an elevational view showing a state where after totally fitting the tube C₁ into the tire T₁, the tire outer wall 1 having been detached is fitted to the rim 3.
Fig. 6 is a partial enlarged view in the circumferential direction showing a state where the tube C₁ is fitted into the tire T₁ by using a tube small piece 10.
Figs. 7A and 7B are cross sectional views showing steps of fitting the tube C₁ into the tire T₁.
Figs. 8C and 8D are cross sectional views showing steps of fitting the tube C₁ into the tire T₁.
Fig. 9E is a cross sectional view showing a state where the tube C₁ is fitted into the tire T₁. Fig. 9E is an enlarged cross sectional view on line X-X in Fig. 5.
Figs. 10A, 10B and 10C are cross sectional views showing tubes C₁, C₂ and C₃, respectively.
Figs. 11A and 11B are cross sectional views showing a tube C₁₁ and a tire T₂ having the tube C₁₁ fitted therein, respectively.
Figs. 12A and 12B are cross sectional views showing a tube C₁₂ and a tire T₂ having the tube C₁₂ fitted therein, respectively.
Fig. 13 is a cross sectional view showing a tube C₁₃ containing a main body 11' and a rim fitting part 12' that are different in hardness.
Figs. 14A and 14B are enlarged cross sectional views showing tubes C₄ and C₁₄, respectively, having two-layer structure.
Fig. 15 is a conceptual illustration showing that the hardness of the tube can be controlled by the hardness of TPE (thermoplastic elastomer) as a raw material for molding the tube, foaming of TPE, and a pore (void) formed in the tube.
Fig. 16 is a graph showing the same as in Fig. 15.

### DESCRIPTION OF THE PREFERRED EMBODIMENTS

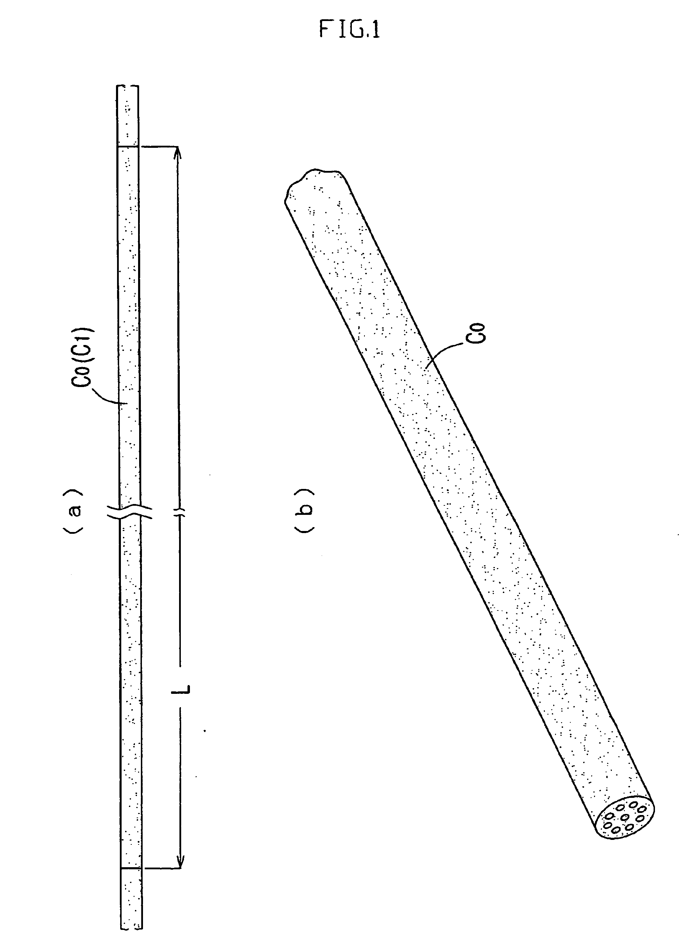

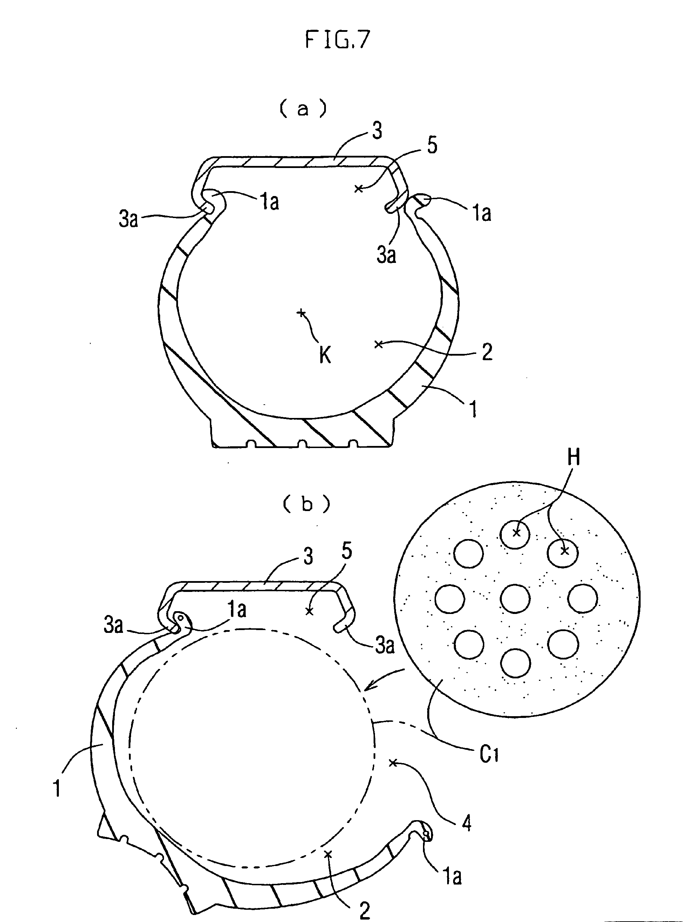

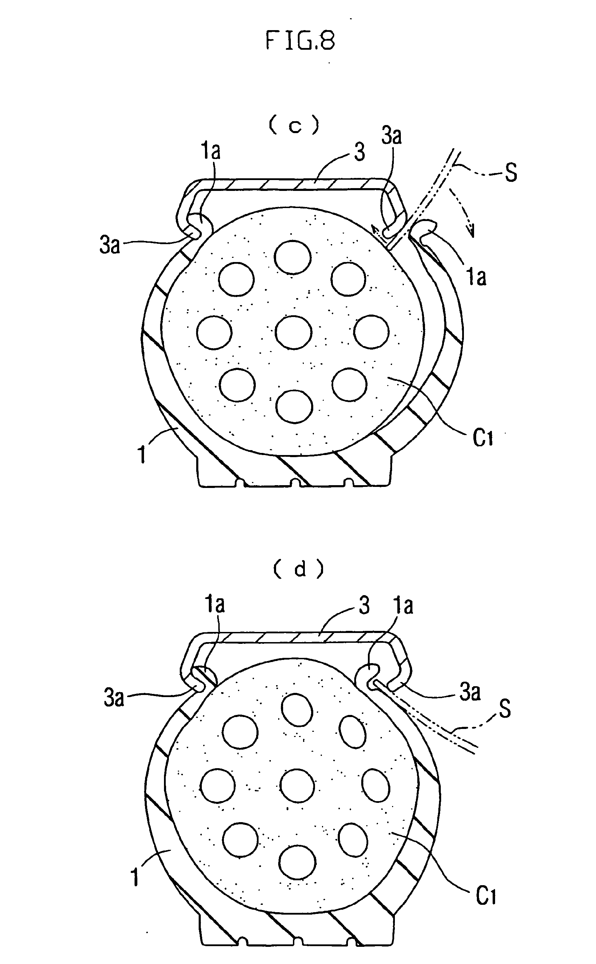

The invention will be described in detail below. A tube C₁ used according to the invention has a circular cross section that is substantially similar to and slightly larger than a tube housing space 2 formed inside a tire outer wall 1, as shown in Figs. 1A, 1B, 8C and 8D, and has a cross sectional area that is from 1 to 1.3 times the cross sectional area of the tube housing space 2. The tube C₁ is in the form of a long member formed by extrusion-molding an elastomer and having a length (L) corresponding to the circumferential length at the center (K) (see Fig. 7A) of the cross section of the tire outer wall 1. The elastomer as the material for the tube C₁ may be any elastomer including rubber as far as it has such elasticity that provides favorable ride quality upon fitting the tube into the tube housing space 2 of the tire outer wall 1 to produce a tire T₁. In consideration of elastic characteristics, lightweight property, productivity, availability of raw materials, and the like, TPE (thermoplastic elastomer) is preferred, and a styrene thermoplastic elastomer is particularly preferred. Preferred examples of the styrene thermoplastic elastomer used in the invention include a block copolymer constituted by a polystyrene block and an elastomer block having a polyolefin structure, and examples thereof include a polystyrene-poly(ethylene-propylene) block (SEP) and a polystyrene-poly(ethylene-propylene) block-polystyrene (SEEPS). Examples of the styrene thermoplastic elastomer also include a styrene-butadiene-styrene copolymer (SBS), a styrene-ethylene-butadiene-styrene copolymer (SEBS), a styrene-ethylene-butadiene-highly crystalline ethylene copolymer (SEBC) and a styrene-ethylene-propylene-styrene copolymer (SEPS), which can be used similarly.

The elastomer preferably has a shore A hardness of from 15 to 65, and more preferably from 20 to 55. In the case where the shore A hardness is 15 or less, the elastomer is too soft and may be difficult to extrude continuously into a shape having a constant cross section in the extrusion direction, and the ride quality may be deteriorated due to the poor elasticity upon fitting into a tire. In the case where the shore A hardness exceeds 65, the elastomer is too hard, i.e., has too large repulsive elasticity, which may deteriorate the ride quality upon fitting into a tire due to too large repellence from the ground.

The tube C₁ used according to the invention is an extrusion-molded member in the form of a long member that is obtained by cutting a tube long member C₀, which is obtained by continuous extrusion-molding an elastomer containing mainly the aforementioned styrene elastomer, to a length corresponding to the size of the tire. Accordingly, the tube can be extruded into a shape having one or plural pores continuous in the longitudinal direction (extrusion direction) by modifying the molding die. The use of the shape having one or plural pores on the cross section of the tube as an extrusion-molded member decreases the weight of the tube while maintaining or substantially not decreasing the elasticity that is essential for the tube. The porosity on the cross section of the tube is preferably from 3 to 25%. In the case where the porosity exceeds 25%, the tube may be deformed excessively upon receiving the ground contact pressure, whereby the ride quality may be deteriorated, and the durability of the tube may be deteriorated due to its brittleness. In the case where the porosity is less than 3%, the effect of decreasing the weight owing to the pore provided inside the tube may not be expected, and the extrusion molding is difficultly performed due to such a phenomenon that the small pores are collapsed by pressure from the periphery after extruding as an intermediate extruded product from a die.

As for the arrangement of the pores (voids) on the cross section of the tube, it is preferred that plural pores having the same shape are arranged on one circumference at a constant interval, rather than one relatively large pore disposed at the center. This is because in the former case, the extent of deformation of the tube with respect to the original shape upon receiving the ground contact pressure is to large to deteriorate the ride quality, whereas in the latter case, the extent of deformation of the tube with respect to the original shape can be suppressed, thereby suppressing the ride quality from being deteriorated on deformation of the tube.

The tube used in the method according to the invention is obtained by cutting a tube long member, which is obtained by extrusion-molding an elastomer, to a length corresponding to the size of the tire. Accordingly, the tube can be obtained by extruding a foamed elastomer, thereby decreasing the weight of the tube through selection of the material. In the case where a thermoplastic elastomer in a molten state is injected into an air tube and cured to produce a tire tube, on the other hand, a foamed elastomer cannot be used because of the reasons described in the foregoing. The foaming factor upon using a foamed elastomer is preferably 3 or less. In the case where the foaming factor exceeds 3, the extent of deformation of the tube with respect to the original shape may be too large upon receiving the ground contact pressure, i.e., the tube has poor elasticity, thereby deteriorating the ride quality, and the tube may be deteriorated in durability due to its brittleness.

The tube C₁ shown in Figs. 1A to 9 has a circular cross section having an outer diameter of 30 mm corresponding to the tire size (26 × 1 3/8), and is molded by extrusion-molding a foamed elastomer as a raw material. The tube C₁ has nine pores H in total each having an inner diameter of 4 mm including one of them at the center of the cross section and remaining eight of them disposed on one circumference with a constant interval around the center. Accordingly, the weight of the tube C₁ is decreased from the standpoint of both material and shape. The tube C₁ has a porosity of 16%, a ratio of the cross sectional area to the cross sectional area of the tube housing space 2 of the tire outer wall 1 of about 1.15, and a foaming factor of 1.5.

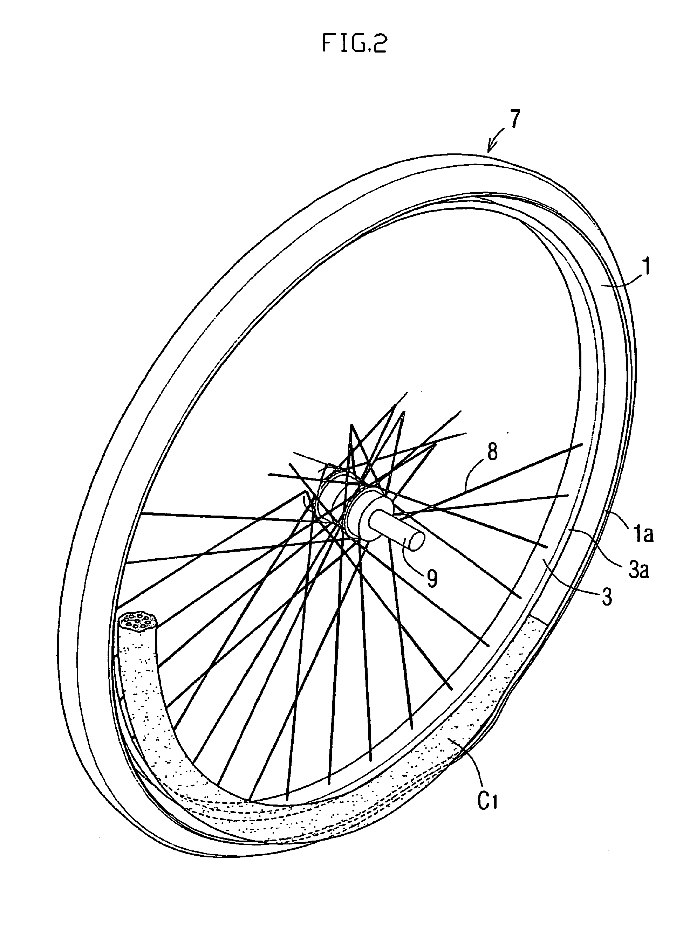

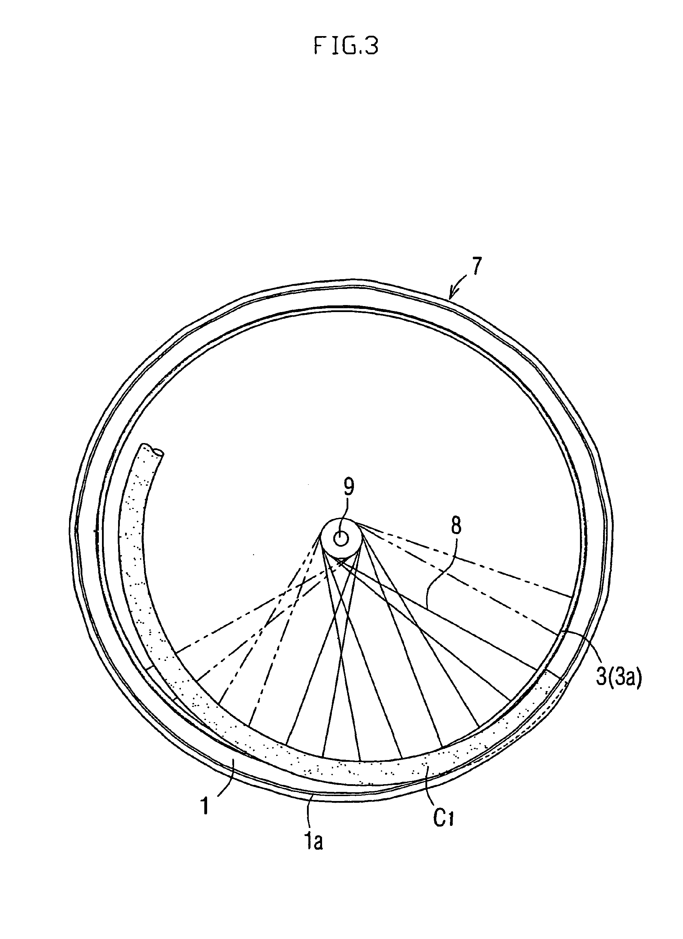

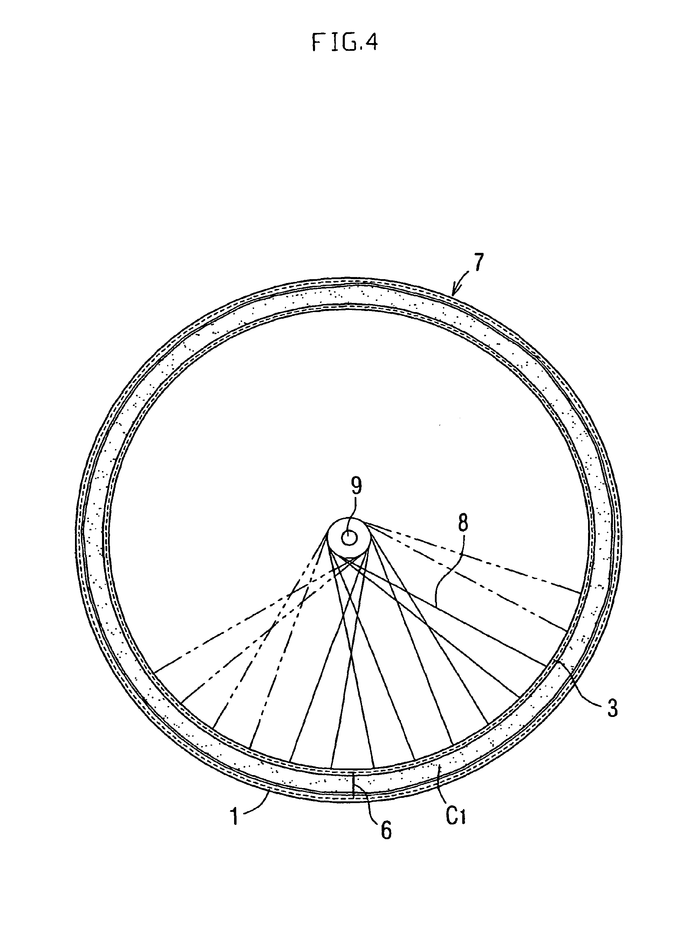

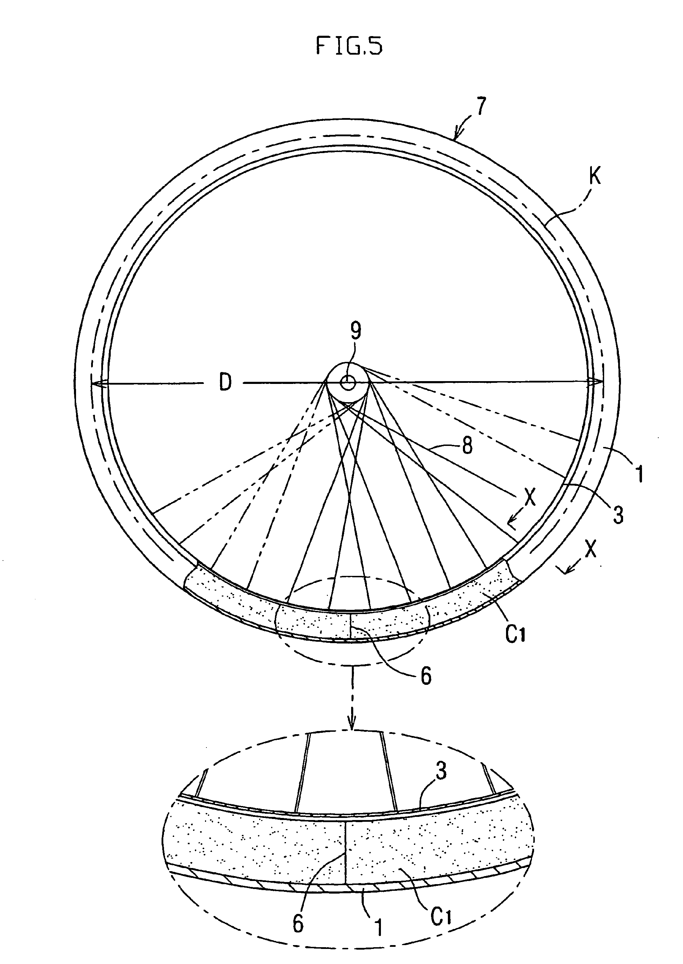

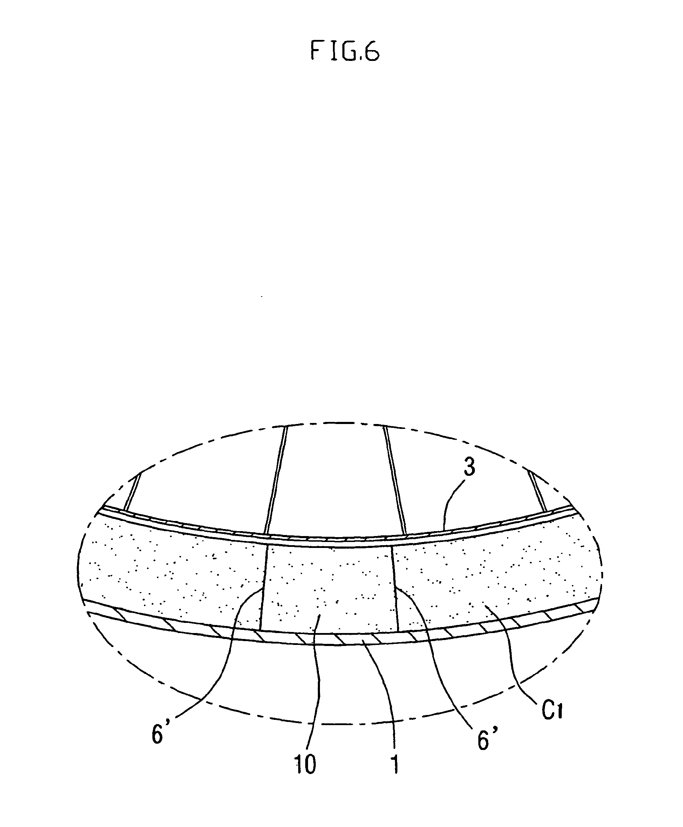

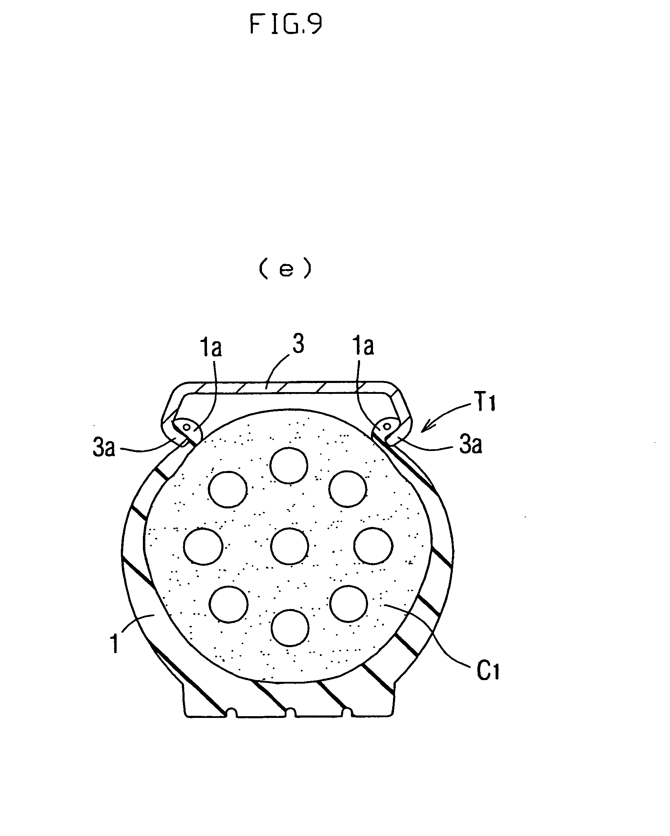

The method for fitting the tube C₁ into the tube housing space 2 of the tire T₁ will be described with reference to Figs. 1A to 9. Figs. 1A and 1B are an elevational view and an enlarged perspective view showing a tube long member C₀, respectively. Figs. 2 and 3 are a perspective view and an elevational view showing the initial state of the operation of detaching one side of the tire outer wall 1 on its cross section from the rim 3, and fitting the tube C₁ into the tube housing space 2 of the tire T₁. Fig. 4 is an elevational view showing the state where the tube C₁ is totally fitted into the tire T₁. Fig. 5 is an elevational view showing the state where after totally fitting the tube C₁ into the tire T₁, the tire outer wall 1 having been detached is fitted to the rim 3. Fig. 6 is a partial enlarged view in the circumferential direction showing the state where the tube C₁ is fitted into the tire T₁ by using a tube small piece 10. Figs. 7A, 7B, 8C, 8D and 9 are cross sectional views showing steps of fitting the tube C₁ into the tube housing space 2 of the tire T₁. Fig. 9E is an enlarged cross sectional view on line X-X in Fig. 5. As shown in Fig. 1A, the tube long member C₀ is cut into a length corresponding to the tire size, i.e., the length (L) corresponding to the circumferential length at the center (K) (see Fig. 7A) of the cross section of the tire outer wall 1 to produce a tube C₁ having a length corresponding to the tire size. The length (L) is determined by the expression L = 2πD, wherein D represents the diameter at the center (K) of the cross section of the tire outer wall 1 (see Fig. 5).

As shown in Figs. 2, 3, 7A and 7B, one side of the tire outer wall 1 on its cross section is detached from the rim 3 to form a tube fitting opening 4 between the detached side of the tire outer wall 1 and the rim 3. In this state, one end in the longitudinal direction of the tube C₁ cut into the form of a long member is fitted into the tube housing space 2 of the tire outer wall 1 through the tube fitting opening 4. Thereafter, the remainder of the tube C₁ is fitted sequentially into the tube housing space 2, and finally the other end of the tube C₁ is fitted into the tube housing space 2 of the tire outer wall 1. In the case where the tube C₁ has been cut into the length corresponding to the tire size, the tube C₁ is fitted in the tire outer wall 1, and the both ends of the tube C₁ are attached to each other. In Figs. 4 and 5, numeral 6 denotes the part where the both ends of the tube C₁ are attached to each other (contact part) . In the case of a tube in an annular shape, the tube is necessarily elongated to climb over the rim immediately before completing the fitting operation. However, the tube C₁ in the form of a long member is fitted into the tube housing part 2 of the tire outer wall 1 sequentially from one end to the other end, whereby there is no necessity of the operation of elongating the tube for the tube climbing over the rim 3, thereby facilitating the fitting operation of the tube C₁ into the tire T₁. In Figs. 2 to 5, numeral 7 denotes a wheel of a bicycle, 8 denotes a spoke of the wheel, and 9 denotes an axle.

In the case where the length of the tube C₁, which has been cut out from the tube long member C₀ into the length corresponding to the tire size, is deviated from the predetermined length to a shorter or longer side, the deviation can be compensated by the following operations. In the case where the tube C₁ is slightly longer than the predetermined length, one end of the tube C₁ is cut out to a necessary length. In the case where the tube C₁ is shorter than the predetermined length, a gap is formed between the both ends of the tube C₁ fitted in the tire outer wall 1. A tube small piece 10 having a length corresponding to the circumferential length of the gap is cut out from the tube long member C₀, and the tube small piece 10 is fitted into the gap. According to the operation, the gap is eliminated with the tube small piece 10, and the boundaries between the tube C₁ and the small piece 10 (connecting parts) are pressed in the circumferential direction of the tube C1 owing to the elasticity of the tube C₁, thereby totally integrating them. Accordingly, the presence of the tube small piece 10 does not provide heterogeneity in elasticity in the circumferential direction of the tire. In Fig. 6, numeral 6' denotes the boundary between the tube C₁ and the tube small piece 10 (connecting part).

Finally, the side of the tire outer wall 1 having been detached from the rim 3 is fitted on an edge 3a of the rim 3 by using a tool described later (which is not shown in the figures) over the entire circumference. The tube C1 is thus compressed on its cross section, and simultaneously, the tire outer wall 1 is slightly expanded, whereby the beads 1a on both ends of the tire outer wall 1 on its cross section are each firmly engaged with the edges 3a of the rim 3 to fit the tube C₁ into the tire T₁ (see Figs. 5 and 9E).

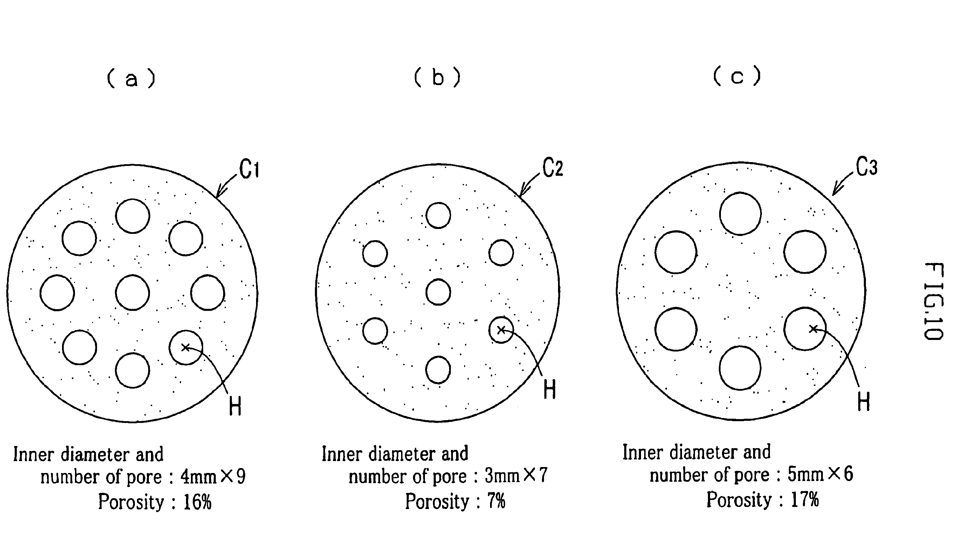

The tube is an extrusion-molded article, and therefore, various kinds of tubes having different porosities can be produced by changing the number and the inner diameters of the pores H, which can be attained only by exchanging the shape of the die installed in the extrusion molding machine. For example, Figs. 10A to 10C show a cross section of three kinds of tubes C₁, C₂ and C₃ having different porosities with different numbers and inner diameters of the pores H. The tube C₁ has been described above. The tube C₂ has seven pores H in total each having an inner diameter of 3 mm including one of them at the center of the cross section and remaining six of them disposed on one circumference with a constant interval around the center to provide a porosity of 7%, and the tube C₃ has six pores H each having an inner diameter of 5 mm disposed on one circumference to provide a porosity of 17%. In the case where plural pores each having a small inner diameter are formed on one circumference as in the tubes C₁ to C₃, but not forming only one large pore at the center, the cross sectional shapes of the tubes C₁ to C₃ are not largely deformed from the original circular shape upon receiving the ground contact pressure when the tire is used, whereby the weight of the tube can be decreased while maintaining the favorable ride quality.

Upon fitting the tubes C₁ to C₃ in the tire T₁, the most part of the tube is fitted in the tube housing space 2 of the tire outer wall 1, but is substantially not fitted in the annular space 5 on the inner side of the rim 3. Upon applying a large ground contact pressure to the tire T₁ upon use, the tubes C₁ to C₃ each receive a load that deforms the tube, whereby the tube is elastically deformed to such a shape that a part of the tube enters in the annular space 5 of the rim 3, and the elastic deformation amount of the tube varies depending on variation of the ground contact pressure. Accordingly, the durability (service life) of the tubes C₁ to C₃ may be deteriorated due to variation of the deformation load applied to the tubes C₁ to C₃ upon using the tire T₁.

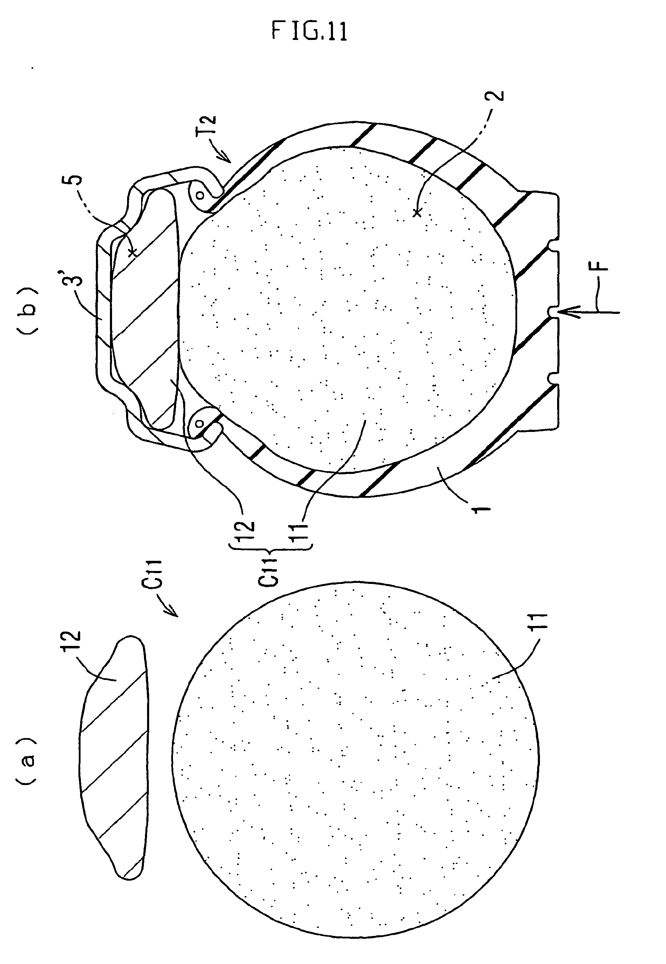

A tube C₁₁ shown in Fig. 11A contains a main body 11 that is fitted in the tube housing space 2 of the tire outer wall 1 and a rim fitting part 12 that is molded separately from the main body 11 and is fitted in to the annular space 5 of the rim 3', whereby upon fitting the tube C₁₁ into the tire T₂, the tube C₁₁ is fitted under compressive deformation not only into the tube housing space 2 of the tire outer wall 1 but also into the annular space 5 of the rim 3. In this structure, the tube C₁₁ receives substantially no deformation load upon using the tire T₂. Accordingly, the tube C₁₁ is constituted by the main body 11 and the rim fitting part 12 that are separately constituted, whereby the tube receives substantially no deformation load upon using the tire T₂. The cross sectional shape of the tube C₁₁ including the main body 11 and the rim fitting part 12 is substantially similar to and slightly larger than the shape constituted by the tube housing space 2 of the tire outer wall 1 and the annular space 5 of the rim 3'.

Upon fitting the tube C₁₁ into the tire T₂, the rim fitting part 12 in the form of a long member is firstly fitted into the annular space 5 of the rim 3', and then the main body 11 is fitted into the tube housing space 2 of the tire outer wall 1. Accordingly, in the state where the tube C₁₁ is fitted in the tire T₂ as shown in Fig. 11B, the rim fitting part 12 is fitted in the annular space 5 of the rim 3' to eliminate a space present in the direction, in which the ground contact pressure F is applied to the tire T₂, whereby the tube C₁₁ does not receive the deformation load to enhance the durability of the main body 11 constituting the tube C₁₁. The hardness of the rim fitting part 12 is larger than the hardness of the main body 11, and thus the tube C₁₁ is elastically deformed mainly by the main body 11, thereby enhancing the ride quality. There are plural kinds of rims that are slightly different in shape, mainly the depth, even though the rims are the same as each other in tire size defined by the outer diameter and the width. In this case, plural kinds of rim fitting parts 12 constituting the tube C₁₁ are provided for matching the plural kinds of rims, whereby the tube C₁₁ can be applied to the plural kinds of rims, which are slightly different in shape but are the same in tire size, with only one kinds of the main body 11 prepared. The rim 3' shown in Fig. 11 has a shape that is deeper than the shape of the rim 3 shown in Figs. 7A to 9E.

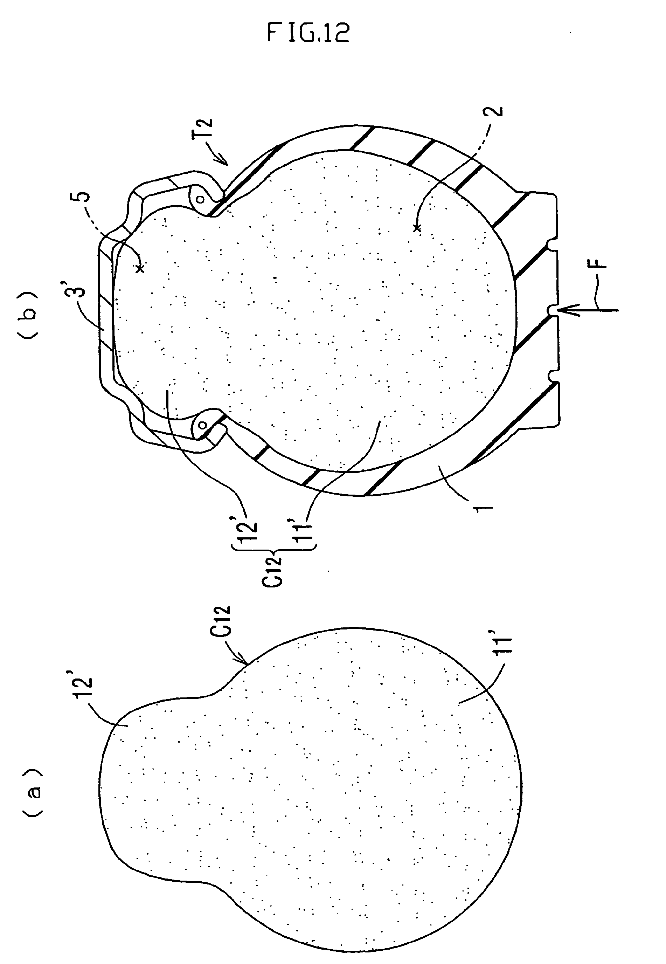

A tube C₁₂ shown in Figs. 12A and 12B contains the main body 11' and the rim fitting part 12' that are the same as those in the tube C₁₁ in function but are molded integrally with each other.

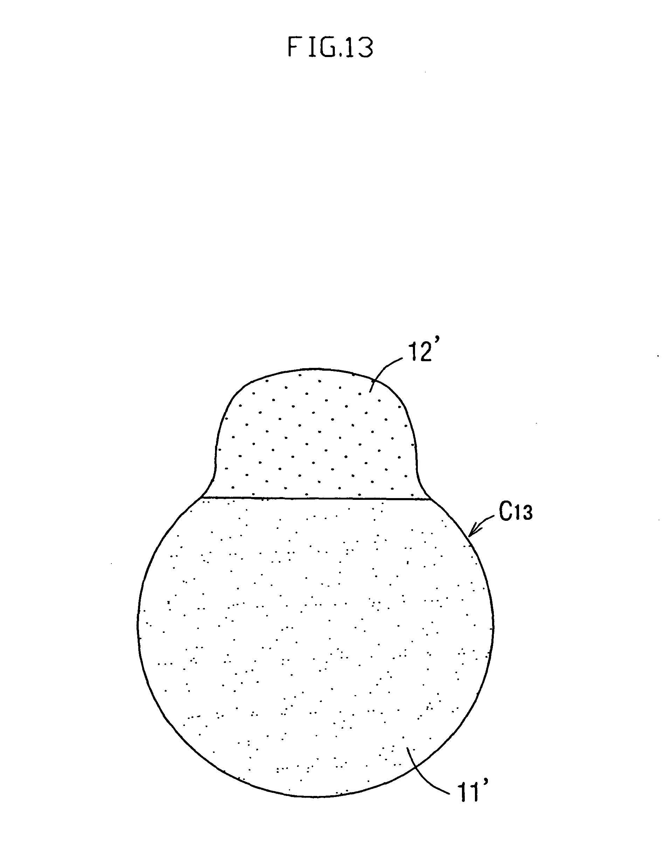

In the tube C₁₂ having the rim fitting part 12' molded integrally with the main body 11', the main body 11' and the rim fitting part 12' may be differentiated in hardness as in a tube C₁₃ shown in Fig. 13, thereby further enhancing the durability of the tube. In this embodiment, the main body 11' of the tube C₁₃ has a shore A hardness of from 15 to 65, by which favorable ride quality can be inherently attained upon fitting in a tire, and the rim fitting part 12' has a shore A hardness of 60 or more, which is higher than the hardness of the main body 11', thereby providing a tube having higher durability than a tube having the same hardness over the entire tube while maintaining or enhancing the ride quality. Particularly, in the state where the tube C₁₃ is fitted in the tire T₂, the part of the tube C₁₃ that is disposed inside the bead 1a of the tire outer wall 1 is made in contact repeatedly with the bead 1a protruding into the inner space of the tire T₂, and thus receives the largest stress due to the load. Accordingly, the hardness of the rim fitting part 12' including that part is made larger than the hardness of the main body 11' to suppress the compressive deformation amount largely, whereby the durability of the tire T₂ can be largely enhanced by reducing the stress due to the load. The tube used according to the invention is an extrusion-molded article, and two kinds of elastomers different in hardness can be easily extruded for the respective positions of the molded article (i.e., co-extrusion molding). Accordingly, the tube C₁₃ can be easily produced by an ordinary extrusion molding technique.

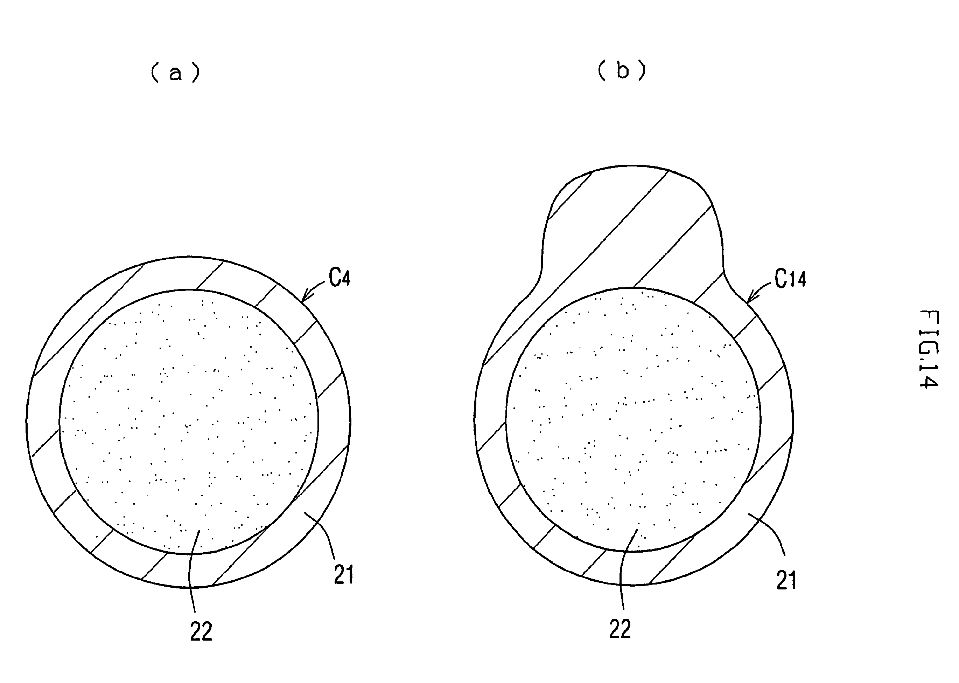

In the case where the tube used according to the invention is molded with a highly foamed elastomer over the entire tube, the tube may be brittle, and the tube may receive an increased stress due to the load with the constricted bead 1a of the tire outer wall 1, thereby deteriorating the durability of the tube. The tube used according to the invention may have the following structures for enhancing the durability in consideration of the fact that the tube is in the form of a long member and is extrusion-molded with an elastomer as a raw material. Figs. 14A and 14B are enlarged cross sectional views showing tubes C₄ and C₁₄, respectively, having two-layer structure. In both the tubes C₄ and C₁₄, the two-layer structure including an outer layer and an inner layer is constituted, in which the outer layer 21 is molded with a unfoamed elastomer, and the inner layer 22 occupying the remaining large portion is molded with a highly foamed elastomer. The outer layer 21, which is in contact with the inner surfaces of the tire outer wall 1 and the rim 3 is rich in abrasion resistance since it is molded with a unfoamed elastomer, whereas the inner layer 22 occupying the large portion is molded with a highly foamed elastomer, which exerts the elasticity that is essentially demanded in the tube. Accordingly, the aforementioned structure provides a tube rich in durability since the part of the tube that is in contact with the inner surfaces of the tire outer wall 1 and the rim 3 has high abrasion resistance while maintaining the sufficient elasticity that is essentially demanded in the tube. The thickness of the outer layer 21 is generally from 2 to 10 mm, and preferably from 3 to 8 mm, in the case where the outer diameter of the main body 11 of the tube C₄ or C₁₄ is 30 mm. The tubes C₄ and C₁₄ having the two-layer structure can be molded by extrusion molding with different elastomers, i.e., co-extrusion molding.

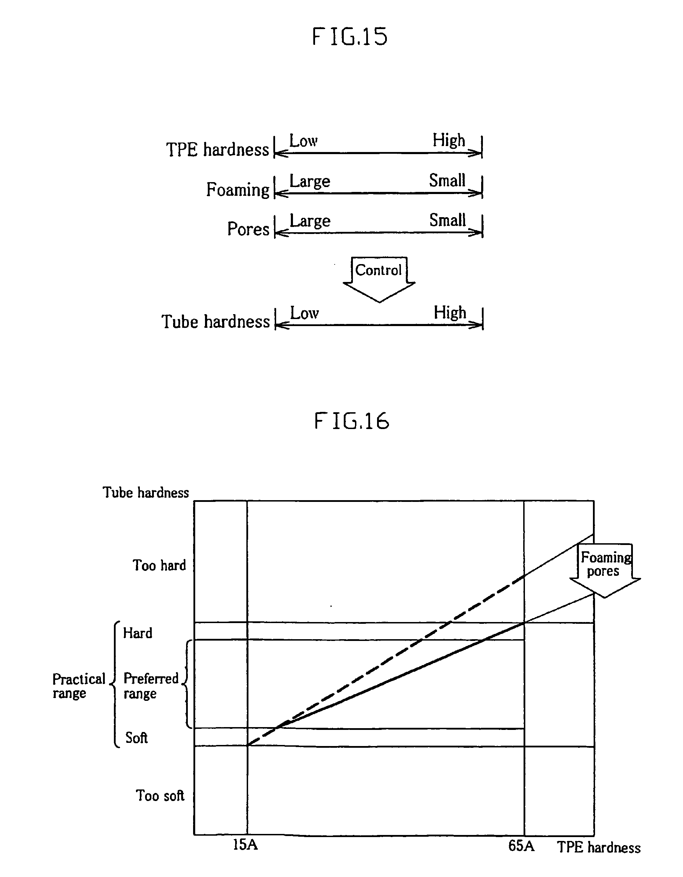

Figs. 15 and 16 show concept on controlling the hardness of the tube used according to the invention. The hardness of the tube can be controlled by the hardness of TPE (thermoplastic elastomer) as a raw material for molding the tube, foaming of TPE (addition of a foaming agent), and an amount of a pore (void) formed in the tube. Accordingly, a tube that has a suitable hardness and a suitable weight (specific gravity) can be molded by appropriately combining the different factors including the hardness of TPE, addition of a foaming agent, and formation of pores, which is one of the characteristic features of the invention.

Typical examples of the application of a tire having the tube fitted therein according to the claimed method include a bicycle, and also include a wheelchair.

### EXAMPLES

The advantages of the invention will be described in more detail with reference to examples and comparative examples shown below. In all the examples and comparative examples, the tires, to which the tubes are fitted, were bicycle tires having a size (26 × 1 3/8).

### Example 1

Raw material used: styrene TPE (Elastomer AR, produced by Aronkasei Co., Ltd., hardness: 35A)
Cross sectional shape: solid shape (without pore) (outer diameter: 30 mm)
Molding temperature: 150°C
Property of tube long member: The tube long member had elasticity suitable for bicycle.
Length of tube: 2,075 mm
Weight of tube: 1,290 g
Ride quality: The tube suffered no problem on running properties on curved road and rugged road and on break performance, and attained favorable ride quality.

### Example 2

Raw material used: styrene TPE (Septon, produced by Kuraray Co., Ltd., hardness: 20A)
Cross sectional shape: solid shape (without pore) (outer diameter: 30 mm)
Molding temperature: 150°C
Property of tube long member: The tube long member had elasticity suitable for bicycle.
Length of tube: 2,075 mm
Weight of tube: 1,280 g
Ride quality: The tube suffered no problem on running properties on curved road and rugged road and on break performance, and attained favorable ride quality.

### Example 3

Raw material used: styrene TPE (Elastomer AR, produced by Aronkasei Co., Ltd., hardness: 45A)
Cross sectional shape: with nine pores having inner diameter of 4 mm (porosity: 16%, outer diameter: 30 mm)
Molding temperature: 160°C
Property of tube long member: The tube long member had elasticity suitable for bicycle.
Length of tube: 2,075 mm
Weight of tube: 1,080 g
Ride quality: The tube suffered no problem on running properties on curved road and rugged road and on break performance, and attained favorable ride quality.

### Example 4

Raw material used: styrene TPE (Elastomer AR, produced by Aronkasei Co., Ltd., hardness: 50A) with a microsphere foaming agent added to attain foaming factor of 1.5
Cross sectional shape: solid shape (without pore) (outer diameter: 30 mm)
Molding temperature: 160°C
Property of tube long member: The tube long member had elasticity suitable for bicycle.
Length of tube: 2,075 mm
Weight of tube: 860 g
Ride quality: The tube suffered no problem on running properties on curved road and rugged road and on break performance, and attained favorable ride quality.

### Example 5

Raw material used: styrene TPE (Elastomer AR, produced by Aronkasei Co., Ltd., hardness: 55A) with a microsphere foaming agent added to attain foaming factor of 1.5
Cross sectional shape: with nine pores having inner diameter of 3 mm (porosity: 9%, outer diameter: 30 mm)
Molding temperature: 165°C
Property of tube long member: The tube long member had elasticity suitable for bicycle.
Length of tube: 2,075 mm
Weight of tube: 780 g
Ride quality: The tube suffered no problem on running properties on curved road and rugged road and on break performance, and attained favorable ride quality.

### Example 6

Raw material used: foamed chloroprene rubber adjusted to attain foaming factor of 1.5
Cross sectional shape: solid shape (without pore) (outer diameter: 30 mm)
Molding method: vulcanization performed after molding to form tube
Property of tube long member: The tube long member had elasticity suitable for bicycle.
Length of tube: 2,075 mm
Weight of tube: 930 g
Ride quality: The tube suffered no problem on running properties on curved road and rugged road and on break performance, and attained favorable ride quality.

### Comparative Example 1

Raw material used: styrene TPE (Septon, produced by Kuraray Co., Ltd., hardness: 10A)
Cross sectional shape: solid shape (without pore) (outer diameter: 30 mm)
Molding temperature: 150°C
Property of tube long member: No tube was able to be molded since it was difficult to perform extrusion molding due to the excessive softness.

### Comparative Example 2

Raw material used: styrene TPE (Elastomer AR, produced by Aronkasei Co., Ltd., hardness: 70A)
Cross sectional shape: with nine pores having inner diameter of 4 mm (porosity: 16%, outer diameter: 30 mm)
Molding temperature: 165°C
Property of tube long member: The tube long member was too hard and was not suitable for bicycle.
Length of tube: 2,075 mm
Weight of tube: 1,090 g
Ride quality: The tube suffered problems on running properties on curved road and rugged road and on break performance, and provided poor ride quality.

### Comparative Example 3

Raw material used: styrene TPE (Elastomer AR, produced by Aronkasei Co., Ltd., hardness: 65A) with a microsphere foaming agent added to attain foaming factor of 1.5
Cross sectional shape: with nine pores having inner diameter of 4 mm (porosity: 16%, outer diameter: 30 mm)
Molding temperature: 165°C
Property of tube long member: The tube long member was too hard and was not suitable for bicycle.
Length of tube: 2,075 mm
Weight of tube: 730 g
Ride quality: The tube suffered problems on running properties on curved road and rugged road and on break performance, and provided poor ride quality.

### Comparative Example 4

Raw material used: styrene TPE (Elastomer AR, produced by Aronkasei Co., Ltd., hardness: 45A)
Cross sectional shape: with eight pores having inner diameter of 6 mm (porosity: 30%, outer diameter: 30 mm)
Molding temperature: 165°C
Property of tube long member: The tube long member had no elasticity and was not suitable for bicycle.
Length of tube: 2,075 mm
Weight of tube: 870 g
Ride quality: The bicycle was not ridden lightly with poor ride quality due to lack of elasticity.

### Comparative Example 5

Raw material used: styrene TPE (Elastomer AR, produced by Aronkasei Co., Ltd., hardness: 59A) with a microsphere foaming agent added to attain foaming factor of 3.5
Cross sectional shape: solid shape (without pore) (outer diameter: 30 mm)
Molding temperature: 165°C
Property of tube long member: The tube long member had no elasticity and was not suitable for bicycle.
Length of tube: 2,075 mm
Weight of tube: 370 g
Ride quality: The bicycle was not ridden lightly with poor ride quality due to lack of elasticity.

It is apparent from comparison between Examples 1 to 6 and Comparative Examples 1 to 5 that the shore A hardness of the tube is preferably 65A or less since when the shore A hardness of the tube exceeds 65A, the tube is too hard to provide too large repulsive elasticity, which fails to provide favorable ride quality. It is also apparent that in the case where the porosity of the tube is as high as 30%, or the foaming factor of the tube is as high as 3.5, these are not preferred since the tube is reduced in weight but may be deteriorated in elastic restoration property to fail to provide favorable ride quality.

## Claims

1. A method for fitting a puncture-proof tire tube (C₁; C₂; C₃; C₄; C₁₁; C₁₂; C₁₃; C₁₄) in a linear form to a tire (T₁; T₂; T₃), the method comprising steps of:
cutting a tire tube long member (Co) extrusion-molded with an elastomer as a raw material into a circumferential length (L) at a center (K) of a cross section of a tire outer wall (1) of the tire (T₁; T₂; T₃);
inserting one end in the longitudinal direction of the cut tire tube into a tube housing space (2) of the tire outer wall (1);
inserting sequentially the tire tube into the tube housing space (2) of the tire outer wall (1) to be ring-shaped, wherein the cut tire tube has a cross sectional area of from 1 to 1.3 times a cross sectional area of the tube housing space (2) of the tire outer wall (1) and wherein the cut tire tube is slightly compressed on the cross section and slightly elongated in the radial direction; and
pressing both ends of the cut tire tube, which is elastically deformed into an annular shape in the tube housing space (2), to each other, so as to fit the tire tube into the tube housing space (2) of the tire outer wall (1) in a state that is equivalent to a tube continuous in the circumferential direction from the standpoint of ride quality.

2. The method as claimed in claim 1, wherein the elastomer has a shore A hardness of from 15 to 65.

3. The method as claimed in claim 1 or 2, wherein the elastomer is a foamed elastomer having a foaming factor of 3 or less, wherein the foaming factor is a value obtained by dividing the density of the raw material resin by the density of the foamed body.

4. The method as claimed in any one of claims 1 to 3, wherein an outer layer (21) of the tire tube (C₄; C₁₄) comprises a molded unfoamed elastomer, and a remaining inner layer (22) occupying the most part of the tire tube (C₄; C₁₄) comprises a molded highly foamed elastomer.

5. The method as claimed in any one of claims 1 to 4, wherein the puncture-proof tire tube has one or plural pore(s) (H) with a porosity of from 3 to 25% that is/are continuous in the longitudinal direction of the tire tube on a cross section of the tire tube.

## Patentansprüche

1. Verfahren zum Einbringen eines durchstoßbeständigen Reifenschlauchs (C₁; C₂; C₃; C₄; C₁₁; C₁₂; C₁₃; C₁₄) in einer linearen Form in einen Reifen (T₁; T₂; T₃), wobei das Verfahren die Schritte umfasst:
Schneiden eines langen Reifenschlauchelements (C₀), das mit einem Elastomer als ein Ausgangsmaterial extrusionsgeformt worden ist, zu einer Umfangslänge (L) an einem Zentrum (K) eines Querschnitts einer Reifenaußenwand (1) des Reifens (T₁; T₂; T₃);
Einbringen eines Endes in der Längsrichtung des geschnittenen Reifenschlauchs in einen Schlaucheinbringraum (2) der Reifenaußenwand (1);
nach und nach Einsetzen des Reifenschlauchs in den Schlaucheinbringraum (2) der Reifenaußenwand (1), so dass dieser ringförmig vorliegt, wobei der geschnittene Reifenschlauch eine Querschnittsfläche des 1- bis 1,3-fachen einer Querschnittsfläche des Schlaucheinbringraums (2) der Reifenaußenwand (1) aufweist, und wobei der Querschnitt des geschnittenen Reifenschlauchs geringfügig zusammengedrückt wird und der geschnittene Reifenschlauch in der radialen Richtung geringfügig gedehnt wird; und
Pressen von beiden Enden des geschnittenen Reifenschlauchs, der in dem Schlaucheinbringraum (2) elastisch zu einer Ringform verformt wird, aneinander, so dass der Reifenschlauch in den Schlaucheinbringraum (2) der Reifenaußenwand (1) in einem Zustand eingebracht wird, der im Hinblick auf die Fahrqualität zu einem Schlauch äquivalent ist, der in der Umfangsrichtung kontinuierlich ist.

2. Verfahren nach Anspruch 1, bei dem das Elastomer eine Shore A-Härte von 15 bis 65 aufweist.

3. Verfahren nach Anspruch 1 oder 2, bei dem das Elastomer ein geschäumtes Elastomer mit einem Schäumfaktor von 3 oder weniger ist, wobei der Schäumfaktor ein Wert ist, der durch Dividieren der Dichte des Ausgangsmaterialharzes durch die Dichte des geschäumten Körpers erhalten wird.

4. Verfahren nach einem der Ansprüche 1 bis 3, bei dem eine Außenschicht (21) des Reifenschlauchs (C₄; C₁₄) ein geformtes ungeschäumtes Elastomer umfasst und eine restliche Innenschicht (22), die den größten Teil des Reifenschlauchs (C₄; C₁₄) einnimmt, ein geformtes, stark geschäumtes Elastomer umfasst.

5. Verfahren nach einem der Ansprüche 1 bis 4, bei dem der durchstoßbeständige Reifenschlauch eine Pore oder eine Mehrzahl von Poren (H) mit einer Porosität von 3 bis 25 % aufweist, die in der Längsrichtung des Reifenschlauchs in einem Querschnitt des Reifenschlauchs kontinuierlich ist oder sind.

## Revendications

1. Procédé d'adaptation d'un tube de pneu anti-perforation (C₁ ; C₂ ; C₃ ; C₄ ; C₁₁ ; C₁₂ ; C₁₃ ; C₁₄) en forme linéaire à un pneu (T₁ ; T₂ ; T₃), le procédé comprenant les étapes consistant à :
découper un long élément de tube de pneu (C₀) moulé par extrusion avec un élastomère comme matière première dans une longueur circonférentielle (L) au centre (K) d'une section transversale d'une paroi externe (1) du pneu (T₁ ; T₂ ; T₃) ;
insérer une extrémité dans la direction longitudinale du tube de pneu coupé dans un espace (2) de la paroi externe (1) du pneu où est logé le tube ;
insérer en séquence le tube de pneu dans l'espace de la paroi externe (1) du pneu où est logé le tube pour lui donner une forme annulaire, dans lequel le tube de pneu coupé a une section transversale de 1 à 1,3 fois la surface en coupe transversale de l'espace (2) de la paroi externe (1) du pneu où est logé le tube et dans lequel le tube de pneu découpé est légèrement comprimé en section transversale et légèrement allongé dans la direction radiale ; et
presser les deux extrémité du tube de pneu coupé, qui est déformé de manière élastique en forme tubulaire dans l'espace (2) où est logé le tube, l'une sur l'autre, de manière à adapter le tube de pneu dans l'espace (2) de la paroi externe (1) du pneu où est logé le tube dans un état qui équivaut à un tube continu dans la direction circonférentielle du point de vue de la qualité de la promenade.

2. Procédé selon la revendication 1, dans lequel l'élastomère a une dureté Shore A de 15 à 65.

3. Procédé selon la revendication 1 ou la revendication 2, dans lequel l'élastomère est un élastomère expansé ayant un facteur d'expansion de 3 ou moins, dans lequel le facteur d'expansion est une valeur obtenue en divisant la densité de la résine de matière première par la densité du corps expansé.

4. Procédé selon l'une quelconque des revendications 1 à 3, dans lequel une couche externe (21) du tube de pneu (C₄ ; C₁₄) comprend un élastomère non expansé moulé et une couche interne restante (22) occupant la majeure partie du tube de pneu (C₄ ; C₁₄) comprend un élastomère hautement expansé moulé.

5. Procédé selon l'une quelconque des revendications 1 à 4, dans lequel le tube de pneu anti-perforation présente un ou plusieurs pores (H) d'une porosité de 32 à 25 % qui est ou sont continus dans la direction longitudinale du tube de pneu sur une section transversale du tube de pneu.
